# EUROPEAN PATENT APPLICATION

(11) **EP 3 501 631 A1**
(43) Date of publication of application: **26.06.2019**
(21) Application number: 17901390.9
(22) Date of filing: 09.08.2017
(51) Int. Cl.: B01J 2/00, B01J 2/12, C10L 5/44

(54) **FURNACE BODY HEATING DEVICE**

(30) Priority: 22.03.2017 CN 201710174626
(71) Applicant: Bo, Hongmei, Shenzhen, Guangdong 518000 (CN)
(72) Inventor: Bo, Hongmei, Shenzhen, Guangdong 518000 (CN)
(74) Representative: Michalski Hüttermann & Partner Patentanwälte mbB
(86) International application number: PCT/CN2017/096521
(87) International publication number: WO 2018/171106

(57) **Abstract**

Disclosed is a furnace body heating device (10) for heating materials, comprising a first furnace body (100), a drum (200), a heat transfer pipe (300) and a second furnace body (400), wherein the first furnace body (100) is provided with an accommodation cavity (110); the drum (200) penetrates into the accommodation cavity (110) and is rotatably connected to the first furnace body (100), and the first furnace body (100) heats an outer wall of the drum (200); the drum (200) is provided with a cavity (210) and a mounting hole (220); the cavity (210) is in communication with the mounting hole (220); the cavity (210) is used for accommodating the materials; the heat transfer pipe (300) penetrates into the mounting hole (220) and extends into the cavity (210), and is used for heating the materials in the cavity (210); and the second furnace body (400) is in communication with an end part on the heat transfer pipe (300) away from the drum (200), and is used for generating hot air.

## Description

### TECHNICAL FIELD

The present disclosure relates to a field of display technology, and particularly to a furnace body heating device.

### BACKGROUND

At present, the demand for coal in power plants in the world is very large, but the fossil fuels such as coal will emit a large amount of greenhouse gas and irremovable dust when burning. Therefore, there is a new type of green energy "biofuel" to replace traditional fossil fuels such as coal. The biofuel is converted by compressing residual plant or crop materials such as straw, stalk, wood, palm shell and coconut shell.

A device for synthesizing particles is used to heat plant materials to convert the plant materials into biofuels. However, a conventional device for synthesizing particles may have a problem of lower heating efficiency.

### SUMMARY

Accordingly, it is necessary to provide a furnace body heating device with a higher heating efficiency.

A furnace body heating device for heating a material includes:
a first furnace body provided with an accommodation cavity;
a drum extending through the accommodation cavity and rotatably connected to the first furnace body, the first furnace body heats an outer wall of the drum, the drum is provided with a cavity and a mounting hole, the cavity is in communication with the mounting hole, and the cavity is configured to accommodate the material;
a heat transferring pipe extending through the mounting hole and into the cavity, and configured to heat the material in the cavity; and
a second furnace body in communication with an end portion of the heat transferring pipe away from the drum, and being configured to generate hot air.

The details of one or more embodiments of present disclosure are set forth in the accompanying drawings and the description below. Other features, objects, and advantages of present disclosure will be apparent from the description and drawings, and from the claims.

### BRIEF DESCRIPTION OF THE DRAWINGS

To illustrate the technical solutions according to the embodiments of the present disclosure or in the prior art more clearly, the accompanying drawings for describing the embodiments or the prior art are introduced briefly in the following. Apparently, the accompanying drawings in the following description are only some embodiments of the present disclosure, and persons of ordinary skill in the art can derive other drawings from the accompanying drawings without creative efforts.
FIG. 1 is a perspective view of a furnace body heating device according to an embodiment.
FIG. 2 is a top view of the furnace body heating device of FIG. 1.
FIG. 3 is a cross-sectional view of the furnace body heating device of FIG. 1.
FIG. 4 is a partial enlarged view of the portion A of the furnace body heating device of FIG. 3.
FIG. 5 is a partial enlarged view of the portion B of the furnace body heating device of FIG. 3.
FIG. 6 is a partial enlarged view of the furnace body heating device of FIG 1.
FIG. 7 is a schematic view showing a connection between a heat transferring pipe and a air duct of the furnace body heating device of FIG. 1.
FIG. 8 is a partial enlarged view of the portion C of the connection between the heat transferring pipe and the air duct of the furnace body heating device of FIG. 7.
FIG. 9 is a partial enlarged view of the portion D of the connection between the heat transferring pipe and the air duct of the furnace body heating device of FIG. 7.

### DETAILED DESCRIPTION OF THE EMBODIMENTS

Embodiments of the furnace body heating device are described more fully hereinafter with reference to the accompanying drawings. A preferred embodiment is described in the accompanying drawings. The various embodiments of the furnace body heating device may, however, be embodied in many different forms and should not be construed as limited to the embodiments set forth herein. Rather, these embodiments are provided so that this disclosure will be thorough and complete, and will fully convey the scope of the furnace body heating device to those skilled in the art.

Unless otherwise defined, all terms (including technical and scientific terms) used herein have the same meaning as commonly understood by one of ordinary skill in the art to which this invention belongs. The terms used herein is for the purpose of describing particular embodiments only and is not intended to limit the present disclosure. As used herein, the term "and/or" includes any and all combinations of one or more of the associated listed items.

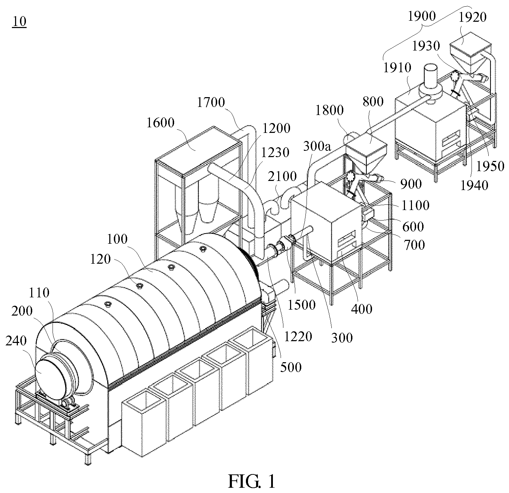

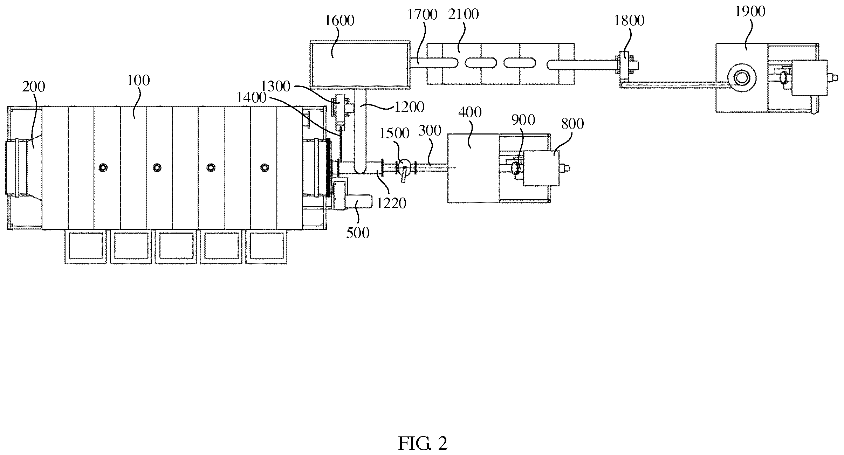

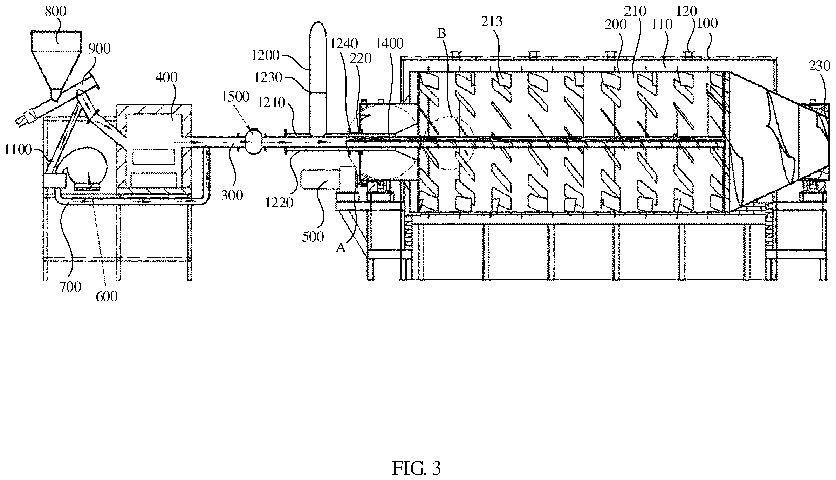

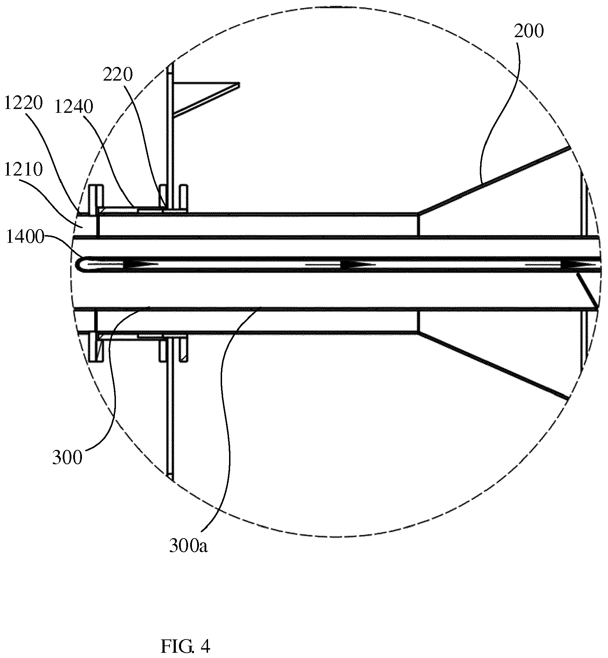

As shown in FIG. 1 and FIG 2, a furnace body heating device 10 according to an embodiment is used to heat a material, so as to convert the material into a fuel. The furnace body heating device 10 includes a first furnace body 100, a drum 200, a heat transferring pipe 300, and a second furnace body 400. The first furnace body 100 is provided with an accommodation cavity 110. The drum 200 extends through the accommodation cavity 110 and is rotatably connected to the first furnace body 100. As shown in FIG. 3 and FIG. 4, the first furnace body 100 can heat an outer wall of the drum 200. The drum 200 is provided with a cavity 210 and a mounting hole 220. The cavity 210 is in communication with the mounting hole 220. The cavity 210 is used to accommodate the material.

The heat transferring pipe 300 extends through the mounting hole 220 and into the cavity 210. The heat transferring pipe 300 is used to heat the material in the cavity 210. The second furnace body 400 is in communication with an end portion of the heat transferring pipe 300 away from the drum 200. The second furnace body 400 is used to generate hot air. In the illustrated embodiment, the drum 200 is a rotating body. The mounting hole 220 and the cavity 210 are both provided along an axis of the drum 200. The mounting hole 220 is located at a first end of the drum 200.

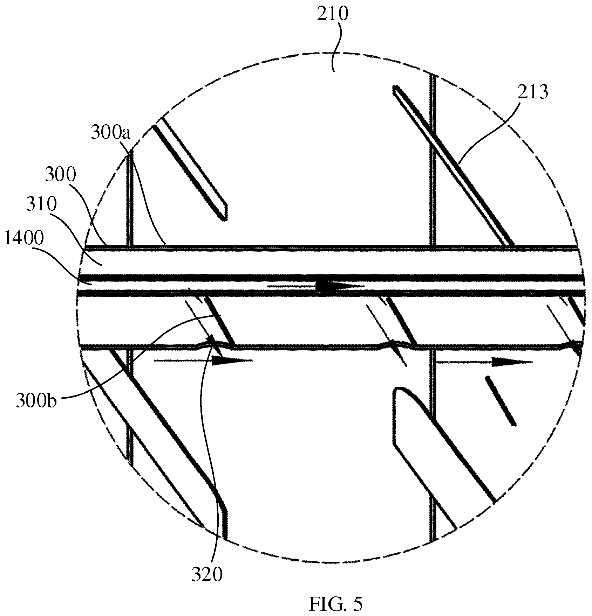

As shown in FIG 3, in one of the embodiments, a second end of the drum 200 is provided with a feed hole 230, which is in communication with the cavity 210. In one of the embodiments, a cover body 240 is located on the drum 200, and the cover body 240 covers the second end of the drum 200, so as to prevent the hot air in the cavity 210 from overflowing from the feed hole 230. When the material to be processed is to be fed in or the formed fuel is to be taken out, the cover body 240 can be opened by the user. As shown in FIG. 5, in one of the embodiments, a lifter plate 213 is provided in an inner wall of the cavity 210. When the drum 200 rotates relative to the first furnace body 100, the lifter plate 213 stirs the material in the cavity 210, such that the material is uniformly heated, and the loading and unloading of the materials also become convenient.

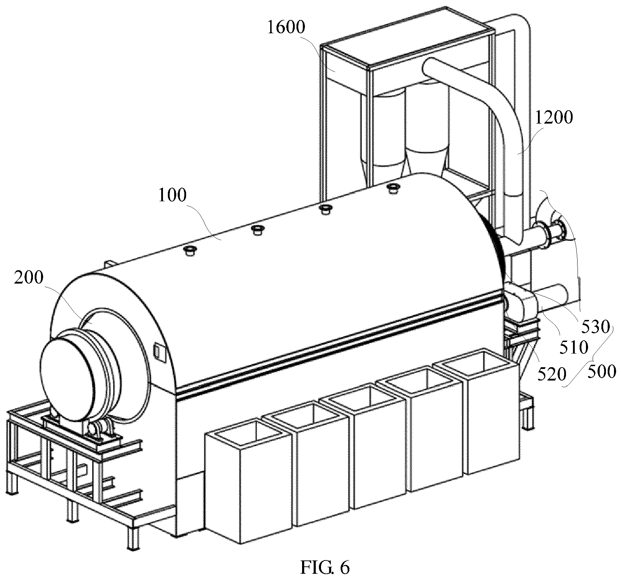

As shown in FIG. 3, in one of the embodiments, the first furnace body 100 is further provided with an air outlet 120 in communication with the accommodation cavity 110. Exhaust gas after the drum 200 being heated by the first furnace body 100 is discharged from the air outlet 120. As shown in FIG. 6, in one of the embodiments, the furnace body heating device 10 further includes a driving mechanism 500 provided on the first furnace body 100. A power output end of the driving mechanism 500 is connected to the drum 200, and the driving mechanism 500 drives the drum 200 to rotate relative to a frame. In one of the embodiments, the driving mechanism 500 includes a motor 510, a driving wheel 520, and a driven wheel 530, and the motor 510 is fixed to the first furnace body 100. The driving wheel 520 is located on a power output end of the motor 510. The driven wheel 530 is sleeved on the outer wall of the drum 200. The driving wheel 520 is engaged with the driven wheel 530.

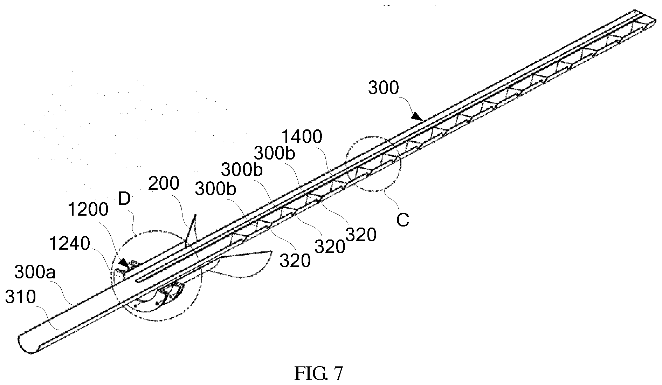

As shown in FIG. 5, in one of the embodiments, the heat transferring pipe 300 is provided with a heat transferring passage 310 and a heat emission hole 320. The heat transferring passage 310 is in communication with the heat emission hole 320. The heat emission hole 320 is located in the cavity 210. The hot air generated by the second furnace body 400 is discharged into the heat emission hole 320 through the heat transferring passage 310, then enters the cavity 210 through the heat emission hole 320 to heat the material, thereby improving the heating effect of the material. As shown in FIG. 7, in one of the embodiments, a plurality of heat emission holes 320 are provided, and the plurality of heat emission holes 320 are spaced apart from each other on the heat transferring pipe 300 and are all in communication with the heat transferring passage 310. The plurality of heat emission holes 320 are all located in the cavity 210.

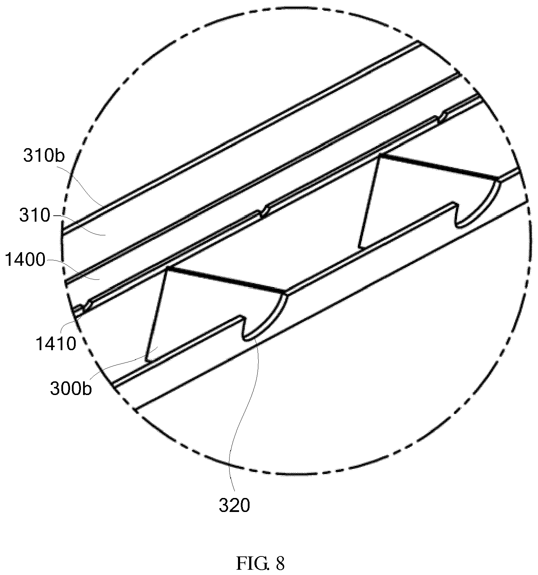

As shown in FIG. 7 and FIG. 8, in one of the embodiments, the heat transferring pipe 300 includes a pipe body 300a and a baffle 300b. The pipe body 300a is in communication with the second furnace body 400. The heat transport passage 310 and the heat emission hole 320 are both provided on the pipe body 300a. The baffle 300b is located in the heat transferring passage 310 and connected to the pipe body 300a. The baffle 300b is located proximately to the heat emission hole 320. The baffle 300b is used to push the hot air from the heat transferring passage 310 into the heat emission hole 320, so as to improve the heating effect of the material. In one of the embodiments, a plurality of baffles 300b are provided, and the plurality of baffles 300b are all connected to the pipe body 300a. The plurality of baffles 300b are corresponding to the plurality of heat emission holes 320, respectively.

Referring to FIG. 3 again, in one of the embodiments, the furnace body heating device 10 further includes a first blower 600 and a first vent pipe 700, the first blower 600 is connected to the first vent pipe 700. Referring to FIG. 4, an end portion of the first vent pipe 700 away from the first blower 600 extends into the pipe body 300a and is in communication with the heat transport passage 310. The first blower 600 draws air from the outside into the pipe body 300a through the first vent pipe 700, so as to facilitate the hot air in the pipe body 300a being fed into the cavity 210 quickly.

For example, the furnace body heating device 10 includes the first furnace body 100, the drum 200, the heat transferring pipe 300, the second furnace body 400, the driving mechanism 500, the first blower 600, and the first vent pipe 700. The first furnace body 100 is provided with the accommodation cavity 110. The drum 200 extends though the accommodation cavity 110 and is rotatably connected to the first furnace body 100. As shown in FIG. 3 and FIG. 4, the first furnace body 100 heats the outer wall of the drum 200, so as to heat the material. Since the drum 200 is rotatably connected to the first furnace body 100, the drum 200 can rotate relative to the first furnace body 100 while heating, such that the furnace body heating device 10 can uniformly heat the material. The first furnace body 100 is further provided with the air outlet 120 in communication with the accommodation cavity 110. The exhaust gas after the drum 200 being heated by the first furnace body 100 is discharged from the air outlet 120. The drum 200 is provided with the cavity 210 and the mounting hole 220. The cavity 210 is in communication with the mounting hole 220. The cavity 210 is used to accommodate the material. The feed hole 230 is located on the second end of the drum 200, and the feed hole 230 is in communication with the cavity 210. The material can enter the cavity 210 through the feed hole 230. The furnace body heating device 10 can heat the material in the drum 200 through both the internal and external heating methods, such that a higher heating efficiency is achieved, and the problem of the device for synthesizing particles the has lower heating efficiency is solved.

The heat transferring pipe 300 is used to heat the material in the cavity 210. The second furnace body 400 is in communication with an end portion of the heat transferring pipe 300 away from the drum 200. The second furnace body 400 is used to generate hot air. The heat transferring pipe 300 is provided with a heat transferring passage 310 and a heat emission hole 320. The heat transferring passage 310 is in communication with the heat emission hole 320. The heat emission hole 320 is located in the cavity 210. The hot air generated by the second furnace body 400 is discharged into the heat emission hole 320 through the heat transferring passage 310, then enters the cavity 210 through the heat emission hole 320 to heat the material, thereby improving the heating effect of the material. As shown in FIG. 6, the driving mechanism 500 is located on the first furnace body 100. The power output end of the driving mechanism 500 is connected to the drum 200, and the driving mechanism 500 drives the drum 200 to rotate relative to the frame. The first blower 600 is connected to the first vent pipe 700. The end portion of the first vent pipe 700 away from the first blower 600 extends into the pipe body 300a and is in communication with the heat transport passage 310. The first blower 600 draws air from the outside into the pipe body 300a through the first vent pipe 700, so as to facilitate the hot air in the pipe body 300a being fed into the cavity 210 quickly.

Referring to FIG. 3 again, in one of the embodiments, the furnace body heating device 10 further includes a first hopper 800, a first feed pipe 900 and a second vent pipe 1100. The first hopper 800 is in communication with the first feed pipe 900. The first hopper 800 is used to receive the fuel. An end portion of the first feed pipe 900 away from the first hopper 800 extends into the second furnace body 400. The second vent pipe 110 is connected to the first blower 600. An end portion of the second vent pipe 1100 away from the first blower 600 is in communication with the first feed pipe 900. The fuel received in the first hopper 800 enters the second furnace body 400 through the first feed pipe 900 and is burned, so as to generate the hot air. The first blower 600 also draws air from the outside into the first feed pipe 900 through the second vent pipe 1100, such that the air enters the second furnace body 400 along with the fuel, and the fuel can be prevented from burning in the first feed pipe 900. In the illustrated embodiment, the fuel can be a biofuel or a coal.

As shown in FIG. 7 and FIG. 8, in one of the embodiments, the furnace body heating device 10 further includes an air duct 1200. The air duct 1200 extends through the mounting hole 220 and is rotatably connected to the drum 200. The air duct 1200 is sleeved on the pipe body 300a, and a gap 1210 is formed between an inner wall of the air duct 1200 and the pipe body 300a, so as to discharge the exhaust gas in the drum 200. In one of the embodiments, the air duct 1200 includes an air duct body 1220 and an extending pipe 1230, and the air duct body 1220 is in communication with the extending pipe 1230. The air duct body 1220 is sleeved on the pipe body 300a, and the gap 1210 is formed between the inner wall of the air duct 1200 and the pipe body 300a. The exhaust gas in the drum 200 passes through the gap 1210 and the extending pipe 1230 in sequence.

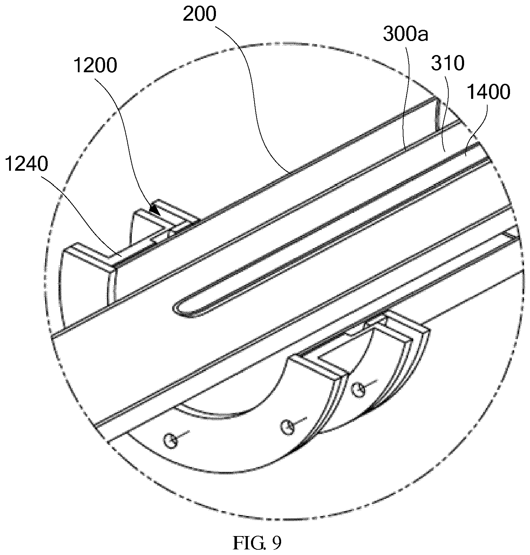

As shown in FIG. 7 and FIG. 9, in one of the embodiments, the air duct 1200 further includes a sealing sleeve 1240 sleeved on the air duct body 1220. Also referring to FIG. 4, the sealing sleeve 1240 is sleeved on the air duct body 1220, and the sealing sleeve 1240 is rotatably connected to the drum 200, and is located in the mounting hole 220.

Referring to FIG. 2 again, in one of the embodiments, the furnace body heating device 10 further includes a second blower 1300, a third vent pipe 1400, and a valve 1500. The second blower 1300 is connected to the third vent pipe 1400. Also referring to FIG. 4, the third vent pipe 1400 extends into the air duct 1200, and an end portion of the third vent pipe 1400 away from the second blower 1300 extends into the pipe body 300a and is in communication with the heat transport passage 310. The third vent pipe 1400 is connected to the baffle 300b, and the third vent pipe 1400 is provided with a vent hole 1410 corresponding to the heat emission hole 320. The valve 1500 is located on the pipe body 300a, and is located between the second furnace body 400 and the drum 200. When the material in the cavity 210 of the drum 200 finishes heating, and the product in the cavity 210 is to be unloaded, the user can close the valve 1500, so as to prevent the hot air generated by the second furnace body 400 from continuing to enter the cavity 210 through the heat transferring passage 310 and causing a waste. In the illustrated embodiment, the valve 1500 is provided on the pipe body 300a, and is located between the second furnace body 400 and the drum 200. The valve 1500 is also located outside of the main body of the air duct 1200, and is convenient to operate.

As shown in FIG. 2, in one of the embodiments, the furnace body heating device 10 further includes a dust removing mechanism 1600. The dust removing mechanism 1600 is connected to the air duct 1200. The dust removing mechanism 1600 is used to remove dust from the exhaust gas, so as to prevent the dust in the exhaust gas from directly entering the air. In the illustrated embodiment, the dust removing mechanism 1600 is a cyclone dust collector.

As shown in FIG. 2, in one of the embodiments, the furnace body heating device 10 further includes a connecting pipe 1700, a third blower 1800, and a combustion heating mechanism 1900. Two ends of the connecting pipe 1700 are connected to the dust removing mechanism 1600 and the combustion heating mechanism 1900, respectively. The third blower 1800 is provided on the connecting pipe 1700. The combustion heating mechanism 1900 is used to burn the exhaust gas, so as to prevent the exhaust gas from directly entering the air and making pollution.

As shown in FIG. 1, in one of the embodiments, the combustion heating mechanism 1900 includes a third furnace 1910, a second hopper 1920, and a second feed pipe 1930. The connecting pipe 1700 is connected to the third furnace 1910. The exhaust gas in directly discharged into the third furnace 1910 through the connecting pipe 1700. The second hopper 1920 is used to receive a combustion improver. Two ends of the second feed pipe 1930 are connected to the third furnace 1910 and the second hopper 1920, respectively.

As shown in FIG. 1, in one of the embodiments, the combustion heating mechanism 1900 further includes a fourth blower 1940 and a fourth vent pipe 1950. The fourth blower 1940 is connected to the fourth vent pipe 1950. An end of the fourth vent pipe 1950 away from the fourth blower 1940 is in communication with the second feed pipe 1930. Also referring to FIG. 2, in one of the embodiments, the furnace body heating device 10 further includes a purification mechanism 2100 provided on the connecting pipe 1700 between the dust removing mechanism 1600 and the third blower 1800. The purification mechanism 2100 is used to remove tar and water vapor in the exhausted gas, so as to prevent the tar and water gas from adhering to the fourth blower 1940.

According to the aforementioned furnace body heating device 10, the drum 200 extends through the accommodation cavity 110, and the cavity 210 of the drum 200 is used to receive the material, the first furnace body 100 can heat the outer wall of the drum 200, so as to heat the material. Since the heat transferring pipe 300 extends through the mounting hole 220 and into the cavity 210, the hot air generated by the second furnace body 400 heats the material in the cavity 210 through the heat transferring pipe 300. Since the drum 200 is rotatably connected to the first furnace body 100, the drum 200 can rotate relates to the first furnace body 100, such that the furnace body heating device 10 can uniformly heat the material. The aforementioned furnace body heating device 10 can heat the material in the drum 200 through both the internal and external heating methods, such that a higher heating efficiency is achieved, and the problem of the device for synthesizing particles the has lower heating efficiency is solved.

The technical features of the embodiments described above can be arbitrarily combined. In order to make the description succinct, there is no describing of all possible combinations of the various technical features in the foregoing embodiments. It should be noted that there is no contradiction in the combination of these technical features which should be considered as the scope of the description.

Although the present disclosure is illustrated and described herein with reference to specific embodiments, the present disclosure is not intended to be limited to the details shown. It is to be noted that, various modifications may be made in the details within the scope and range of equivalents of the claims and without departing from the present disclosure. Therefore, the protection scope of the present disclosure shall be subject to the protection scope of the claims.

## Claims

1. A furnace body heating device for heating a material, comprising:
a first furnace body provided with an accommodation cavity;
a drum extending through the accommodation cavity and rotatably connected to the first furnace body, wherein the first furnace body heats an outer wall of the drum, the drum is provided with a cavity and a mounting hole, the cavity is in communication with the mounting hole, and the cavity is configured to accommodate the material;
a heat transferring pipe extending through the mounting hole and into the cavity, and configured to heat the material in the cavity; and
a second furnace body in communication with an end portion of the heat transferring pipe away from the drum, and configured to generate hot air.

2. The furnace body heating device according to claim 1, wherein the heat transferring pipe is provided with a heat transferring passage and a heat emission hole, the heat transferring passage is in communication with the heat emission hole, and the heat emission hole is located in the cavity.

3. The furnace body heating device according to claim 2, wherein the heat transferring pipe comprises a pipe body and a baffle, the pipe body is in communication with the second furnace body, the heat transport passage and the heat emission hole are both provided on the pipe body, the baffle is located in the heat transferring passage and connected to the pipe body, the baffle is located proximately to the heat emission hole, and the baffle is configured to push the hot air from the heat transferring passage into the heat emission hole.

4. The furnace body heating device according to claim 3, further comprising a first blower and a first vent pipe, wherein the first blower is connected to the first vent pipe, and an end portion of the first vent pipe away from the first blower extends into the pipe body and is in communication with the heat transport passage.

5. The furnace body heating device according to claim 4, further comprising a first hopper, a first feed pipe and a second vent pipe, wherein the first hopper is in communication with the first feed pipe, the first hopper is configured to receive a fuel, an end portion of the first feed pipe away from the first hopper extends into the second furnace body, the second vent pipe is connected to the first blower, and an end portion of the second vent pipe away from the first blower is in communication with the first feed pipe.

6. The furnace body heating device according to claim 4, further comprising an air duct, wherein the air duct extends through the mounting hole and is rotatably connected to the drum, the air duct is sleeved on the pipe body, and a gap is formed between an inner wall of the air duct and the pipe body, so as to discharge exhaust gas in the drum.

7. The furnace body heating device according to claim 6, further comprising a second blower, a third vent pipe, and a valve, wherein the second blower is connected to the third vent pipe, the third vent pipe extends into the air duct, and an end portion of the third vent pipe away from the second blower extends into the pipe body and is in communication with the heat transport passage, the third vent pipe is connected to the baffle, and the third vent pipe is provided with a vent hole corresponding to the heat emission hole, the valve is located on the pipe body, and the valve is located between the second furnace body and the drum.

8. The furnace body heating device according to claim 6, further comprising a dust removing mechanism connected to the air duct, wherein the dust removing mechanism is configured to remove dust from the exhaust gas.

9. The furnace body heating device according to claim 8, further comprising a connecting pipe, a third blower, and a combustion heating mechanism, wherein two ends of the connecting pipe are connected to the dust removing mechanism and the combustion heating mechanism, respectively, the third blower is located on the connecting pipe, and the combustion heating mechanism is configured to burn the exhaust gas.

10. The furnace body heating device according to claim 1, further comprising a driving mechanism, wherein a power output end of the driving mechanism is connected to the drum, and the driving mechanism drives the drum to rotate relative to the frame.
